# EUROPÄISCHE PATENTANMELDUNG

(11) **EP 2 853 363 A1**
(43) Veröffentlichungstag der Anmeldung: **01.04.2015**
(21) Anmeldenummer: 14003330.9
(22) Anmeldetag: 26.09.2014
(51) Int. Cl.: B26D 1/00, B26D 1/44, B26D 7/12, B26F 1/44, B23D 61/12

(54) **Schneid- oder Stanzwerkzeug**

(30) Priorität: 27.09.2013 DE 202013008594 U
(71) Anmelder: Weil Engineering GmbH, 79379 Müllheim (DE)
(72) Erfinder: Anton, Jere, 73113 Ottenbach (DE)
(74) Vertreter: Börjes-Pestalozza, Henrich

(57) **Zusammenfassung**

Die Erfindung betrifft ein Schneid- oder Stanzwerkzeug (9), das aus mehreren Materiallagen (14, 15) gebildet ist, und ein Werkzeug-Blatt oder eine Werkzeug-Hülse trägt, wobei das Werkzeug-Blatt oder die Werkzeug-Hülse sich in Richtung zur Schneidkante (12) im Bereich eines Anschliffs (13) verjüngt. Für das erfindungsgemäße Schneid- oder Stanzwerkzeug (9) ist kennzeichnend, dass das Schneid- oder Stanzwerkzeug (9) aus zumindest zwei miteinander verbundenen Materiallagen (14, 15) aus unterschiedlich hartem Material hergestellt ist, das die Schneide aus mindestens einer blattdünnen Schneidlage (14; 14a, 14b, 14c) gebildet ist, dass die wenigstens eine Schneidlage (14; 14a, 14b, 14c) mindestens an einer ihrer beiden Flach- oder Umfangsseiten mit wenigstens einer Trägerlage (15) verbunden ist, welche wenigstens eine Trägerlage (15) den sich in Richtung zur Schneidkante (12) verjüngenden Anschliff (13) trägt und dass die wenigstens eine Trägerlage (15) im Vergleich zu der mindestens einen Schneidlage (14; 14a, 14b, 14c) eine geringere Härte aufweist. Das erfindungsgemäße Schneid- oder Stanzwerkzeug (9) zeichnet sich dadurch aus, dass seine Schneidkante (12) auch über einen längeren Gebrauchszeitraum eine hohe Schnittschärfe aufweist (vgl. Figur 12).

## Beschreibung

Die Erfindung betrifft ein Schneid- oder Stanzwerkzeug, das aus mehreren Materiallagen gebildet ist und ein Werkzeug-Blatt oder eine Werkzeug-Hülse hat, welche(s) eine Schneide mit einer Schneidkante trägt, wobei das Werkzeug-Blatt oder die Werkzeug-Hülse sich in Richtung zur Schneidkante im Bereich eines Anschliffs verjüngt.

Schneid- oder Stanzwerkzeuge sind in den verschiedensten Ausführungen für die unterschiedlichsten Anwendungen bereits vorbekannt. So kennt man bereits Schneidwerkzeuge, die aus mehreren Materiallagen gebildet sind und deren Werkzeug-Blatt als Messer- oder Sägeblatt ausgebildet ist. Stanzwerkzeuge können demgegenüber ein Werkzeug-Blatt oder eine Werkzeug-Hülse aufweisen, mit welchen Teilstücke aus einem Materialstreifen ausgestanzt werden können.

So hat man bereits Stanzmaschinen geschaffen, die eine Mehrzahl von Stanzhülsen aufweisen, mit welchen Stanzhülsen im Wesentlichen runde Teilstücke aus einem Kupplungsbelags-Materialstreifen ausgestanzt werden können. Unterhalb der Stanzhülsen und dem Kupplungsbelags-Materialstreifen ist ein oberflächlich mit einer Klebeschicht versehener Kupplungsscheiben-Träger positionierbar, auf dem die von den Stanzhülsen ausgestanzten Teilstücke aufgepresst werden und verkleben. Da das als Kupplungsbelag verwendete Material jedoch eine abrasive Wirkung hat, werden die Schneidkanten an den Stanzhülsen rasch stumpf. Dies führt letztendlich dazu, dass nicht nur die Stanzränder an der dem Kupplungsscheiben-Träger zugewandten Seite des ausgestanzten Teilstückes, sondern auch die an der gegenüberliegenden freien Stirnseite des Kupplungsbelags-Teilstückes gelegenen Stanzränder ausfransen. Dieses Ausfransen der Stanzränder erschwert anschließend jedoch das Durchfließen des beispielsweise in einem Automatikgetriebe verwendeten Öles, was letztendlich zu einem um drei bis fünf Prozent höheren Kraftstoffverbrauch des Verbrennungsmotors führt.

Es besteht daher insbesondere die Aufgabe, ein Schneid- oder Stanzwerkzeug der eingangs erwähnten Art zu schaffen, bei dem die Schneidkante auch über einen längeren Gebrauchszeitraum nicht stumpf wird.

Die erfindungsgemäße Lösung dieser Aufgabe besteht bei dem Schneid- oder Stanzwerkzeug der eingangs erwähnten Art insbesondere darin, dass das Schneid- oder Stanzwerkzeug aus zumindest zwei flach- oder umfangsseitig miteinander verbundenen Materiallagen aus unterschiedlich hartem Material hergestellt ist, dass die Schneide aus mindestens einer blattdünnen Schneidlage gebildet ist, dass die wenigstens eine Schneidlage mindestens an einer ihrer beiden Flach- oder Umfangsseiten mit wenigstens einer Trägerlage verbunden ist, welche wenigstens eine Trägerlage den sich in Richtung zur Schneidkante verjüngenden Anschliff trägt, und dass die wenigstens eine Trägerlage im Vergleich zu der mindestens einen Schneidlage eine geringere Härte aufweist.

Das erfindungsgemäße Werkzeug kann als Messer oder Rollmesser, Spaltband, Sägeblatt oder dergleichen Schneidwerkzeug ausgestaltet sein. Das erfindungsgemäße Werkzeug lässt sich aber auch als Stanzwerkzeug ausbilden. Das erfindungsgemäße Schneid- oder Stanzwerkzeug ist mehrlagig ausgebildet und weist ein Werkzeug-Blatt oder eine Werkzeug-Hülse auf, welche(s) eine Schneide mit einer Schneidkante trägt. Das Werkzeug-Blatt und die Werkzeug-Hülse verjüngen sich im Bereich eines Anschliffs in Richtung zur Schneidkante hin. Dabei ist das erfindungsgemäße Schneidoder Stanzwerkzeug aus zumindest zwei flach- oder hülsenumfangsseitig miteinander verbundenen Materiallagen aus unterschiedlich hartem Material hergestellt. Die Schneide ist aus mindestens einer vorzugsweise blattdünnen und entsprechend scharfkantigen Schneidlage gebildet, die an mindestens einer ihrer beiden Flachseiten mit wenigstens einer Trägerlage verbunden ist. Diese Trägerlage, welche die blattdünne Schneidlage formstabil stützt, trägt den sich in Richtung zur Schneidkante verjüngenden Anschliff und weist eine im Vergleich zu der mindestens einen Schneidlage geringere Härte auf. Während sich somit die vergleichsweise weiche Trägerlage an abrasivem Material derart abnutzen kann, dass der Anschliff erhalten bleibt, ist die wenigstens eine, vorzugsweise blattdünne und eine scharfe Schneidkante bildende Schneidlage demgegenüber derart hart und beständig, dass das erfindungsgemäße Schneid- oder Stanzwerkzeug auch über einen längeren Zeitraum nicht stumpf wird.

Um die Scharfkantigkeit der Schneidlage auch über einen längeren Gebrauchszeitraum noch zusätzlich zu begünstigen, ist es vorteilhaft, wenn die mindestens eine Schneidlage eine im Vergleich zu einem Schnitt- oder Schleifgut größere Härte aufweist.

Damit sich die Trägerlage demgegenüber derart abnutzen kann, dass der Anschliff stets erhalten bleibt, ist es vorteilhaft, wenn die wenigstens eine Trägerlage eine im Vergleich zum Schnitt- oder Schleifgut geringe Härte aufweist.

Dabei kann es vorteilhaft sein, wenn die Trägerlage aus einem Material oder einer Materialkombination hergestellt ist, gegenüber dem das Schnitt- oder Schleifgut eine abrasive Wirkung hat, derart, dass die wenigstens eine Trägerlage des durch das Schnitt- oder Schleifgut schneidenden Schneid- oder Stanzwerkzeuges geschärft wird. Bei dieser Ausführungsform wird die Trägerlage von dem Schnitt- oder Stanzgut während des Schneid- oder Stanzvorganges derart abrasiv beaufschlagt, dass der Anschliff stets erhalten bleibt und dass das erfindungsgemäße Schneid- oder Stanzwerkzeug seine scharfe Schneidkante auch über einen längeren Gebrauchszeitraum erhält.

Eine bevorzugte Weiterbildung gemäß der Erfindung sieht vor, dass die Schneidlage des erfindungsgemäßen Schneid- oder Stanzwerkzeuges als Multilagenschneide ausgebildet ist. Dazu ist die Schneide aus mindestens zwei vorzugsweise blattdünnen Materiallagen gebildet.

Um auch an der Schneidkante die gewünschte Formgebung zu erhalten, ist es vorteilhaft, wenn die Schneide aus mindestens zwei vorzugsweise blattdünnen Materiallagen unterschiedlicher Härte gebildet ist.

Dabei sieht eine bevorzugte Weiterbildung gemäß der Erfindung, die eine besonders scharfe Schneidkante hat, vor, dass eine die Schneidkante bildende Schneidlage eine im Vergleich zu den übrigen, die Schneide bildenden Schneidlagen größere Härte aufweist.

Bei dem erfindungsgemäßen Schneid- oder Stanzwerkzeug ist die Schneide aus mindestens einer blattdünnen Schneidlage gebildet. Um die wenigstens eine Schneidlage möglichst blattdünn ausgestalten zu können, ist es vorteilhaft, wenn jede Schneidlage eine Dicke von 0,2 bis 20 µ und vorzugsweise von 0,5 bis 3 µ aufweist.

Um das erfindungsgemäße Schneid- oder Stanzwerkzeug während des Gebrauchs fortlaufend schärfen und scharf halten zu können, kann es vorteilhaft sein, wenn das Schneid- oder Stanzwerkzeug zumindest eine Werkzeugführung hat, an welcher Werkzeugführung das Schneid- oder Stanzwerkzeug während eines Schneidvorganges mit seiner Trägerlage entlang gleitet, dass die Werkzeugführung zumindest an ihrer Führungsoberfläche aus einem für die Trägerlage abrasiven Material besteht, und dass die Werkzeugführung des mit seiner an der Werkzeugführung entlang gleitenden Trägerlage geführten Schneid- oder Stanzwerkzeuges eine schärfende oder abrasive Wirkung hat.

Vorteilhaft kann es sein, wenn dem Schneid- oder Stanzwerkzeug wenigstens ein Sensor zugeordnet ist, welcher Sensor den Verschleiß des Schneid- oder Stanzwerkzeuges anhand mindestens eines in Abhängigkeit vom Werkzeugverschleiß verändernden Parameters misst. Mithilfe eines solchen Sensors kann ein in Abhängigkeit vom Werkzeugverschleiß veränderter Parameter erfasst und somit auch der Verschleiß des Schneid- oder Stanzwerkzeuges automatisch bemessen werden.

Dabei sieht eine bevorzugte Ausführungsform gemäß der Erfindung vor, dass der Sensor die Schnitttiefe oder den Überstand der Schneidkante des das Schnitt- oder Stanzgut durchschneidenden Schneid- oder Stanzwerkzeuges über die Schnittgut-Oberfläche misst.

Um eine verschleißbedingte Verkürzung der Schneide auszugleichen, kann es vorteilhaft sein, wenn das Schneidoder Stanzwerkzeug an einem Werkzeughalter gehalten ist, der die Position des Schneid- oder Stanzwerkzeuges relativ zum Schnittgut in Abhängigkeit vom Verschleiß des Schneid- oder Stanzwerkzeuges nachstellt.

Das erfindungsgemäße Werkzeug kann als Messer oder dergleichen Schneidwerkzeug ausgebildet sein, wie es beispielsweise auch im Haushalt benötigt wird. Möglich ist aber auch, dass das erfindungsgemäße Schneidwerkzeug als ein drehbar gelagertes oder drehantreibbares Rollmesser ausgebildet ist.

Dabei sieht eine besonders vorteilhafte Ausführungsform gemäß der Erfindung vor, dass das Rollmesser eine kegelstumpfförmige Außenkontur hat, dessen Kegelstumpfbasis die Schneidlage bildet und dass das Rollmesser koaxial zur Kegelstumpf-Längsachse drehbar oder drehantreibbar gelagert ist.

Um den an der Trägerlage vorgesehenen Anschnitt stets so zu erhalten, dass das erfindungsgemäße Schneid- oder Stanzwerkzeug seine scharfe Schnittkante behält, kann es vorteilhaft sein, wenn an der Trägerlage vorzugsweise mit Abstand vom Schnitt- oder Stanzgut ein Schleifelement schleifend anliegt oder anlegbar ist.

Das erfindungsgemäße Schneid- oder Stanzwerkzeug kann in den verschiedensten Ausführungen für die unterschiedlichsten Anwendungen vorteilhaft eingesetzt werden. So ist es auch möglich, dass das erfindungsgemäße Schneidwerkzeug als Sägeband und Sägeblatt ausgebildet ist.

Eine andere vorteilhafte Ausführungsform gemäß der Erfindung besteht darin, dass das erfindungsgemäße Schneidwerkzeug als Spaltband ausgebildet ist, mit dem beispielsweise Ledermaterial oder dergleichen gespalten werden kann.

Dabei sieht eine bevorzugte Ausführungsform gemäß der Erfindung vor, dass das Spaltband als umlaufendes Endlosband ausgebildet ist und/oder dass am Spaltband ein Schleifelement schleifend anliegt oder anlegbar ist.

Das erfindungsgemäße Werkzeug ist aber ebenso voreilhaft als Stanzwerkzeug verwendbar. So kann das erfindungsgemäße Stanzwerkzeug auch zum Ausstanzen der auf einer Kupplungsscheibe eines Automatikgetriebes vorgesehenen Kupplungsbelags-Teilstücke verwendet werden, wobei selbst über einen längeren Gebrauchszeitraum des Stanzwerkzeuges kein Ausfransen der Kupplungsbelags-Teilstücke auch an ihrem der Kupplungsscheibe bzw. dem Kupplungsscheiben-Träger abgewandten Seitenrand befürchtet werden müsste. Dabei sieht eine bevorzugte Weiterbildung gemäß der Erfindung vor, dass das Stanzwerkzeug zum Vorstanzen oder Ausstanzen von Teilstücken aus einem Kupplungsbelags-Materialstreifen bestimmt ist, und dass dem Stanzwerkzeug ein Stempel folgt, der ein vor- oder ausgestanztes Teilstück aus dem Kupplungsbelags-Materialstreifen ausdrückt und vorzugsweise gegen die Klebefläche eines Kupplungsscheiben-Trägers drückt.

Weiterbildungen gemäß der Erfindung ergeben sich aus den Ansprüchen in Verbindung mit der Zeichnung sowie der Figurenbeschreibung. Nachstehend wird die Erfindung anhand bevorzugter Ausführungsbeispiele noch näher beschrieben.

Es zeigt:
- Figur 1:: ein in Längsrichtung bewegbares Schneid- oder Stanzwerkzeug, das eine den Anschliff tragende Trägerlage sowie eine hier als Multilagenschneide ausgebildete Schneidlage hat, wobei die aus Trägerlage und Schneidlage gebildete Schneide des Stanz- oder Schneidwerkzeuges während der Längsbewegung an einem Schleifelement entlang gleitet, welches den Anschliff an der Trägerlage schärft, bevor das Stanz- oder Schneidwerkzeug in ein unterhalb dem Schleifelement befindliches Schnitt- oder Stanzgut schneidend einfährt,
- Figur 2:: ein in einem schematischem Längsschnitt gezeigtes Stanz- oder Schneidwerkzeug, das eine aus mehreren Schneidlagen gebildete Schneide sowie eine den Anschliff tragende Trägerlage hat, wobei der schräge Anschliff an der Trägerlage sich in einer ebenfalls schrägen Schneidkante der aus mehreren Schneidlagen gebildeten Schneide fortsetzt,
- Figur 3:: ein mit Figur 2 vergleichbares Schneid- oder Stanzwerkzeug, dessen Schneide eine hier dachförmig zugeschliffene Schneidkante hat,
- Figur 4:: ein, sich in ein Schnittgut einschneidendes Schneid- oder Stanzwerkzeug in einer schematischen Seitenansicht,
- Figur 5:: ein Schneid- oder Stanzwerkzeug, das an einem Werkzeughalter gehalten ist, der die verschleißbedingte Verkürzung des Schneid- oder Stanzwerkzeuges ausgleicht, wobei unterhalb des Schneid- oder Stanzwerkzeuges zum Erfassen des Werkzeugverschleißes ein Sensor vorgesehen ist,
- Figur 6:: ein in der Außenkontur etwa kegelstumpfförmig ausgebildetes Rollmesser, das sich in ein Schnittgut einschneidet und beim Abrollen und Einschneiden in das Schnittgut mit seiner Trägerlage an einem Schleifelement schleifend geführt wird,
- Figur 7:: das Rollmesser aus Figur 6 in einer Vorderansicht,
- Figur 8:: das Rollmesser aus Figur 6 und 7 in einer Seitenansicht,
- Figur 9:: das hier nur in einem Teilbereich gezeigte, bandförmig umlaufende Sägeblatt einer Bandsäge,
- Figur 10:: ein ebenfalls endlos umlaufendes Spaltband, das zum Aufspalten von Leder oder dergleichen Spalt- oder Schnittgut vorgesehen ist, wobei das Spaltband auf seiner dem Spalt- oder Schnittgut abgewandten Längsseite an einem Schleifelement schleifend entlang gleitet,
- Figur 11:: das Spaltband aus Figur 10 in einem Querschnitt durch Schnittebene A-A gemäß Figur 10, und
- Figur 12:: eine Stanzvorrichtung, die eine Vielzahl gruppenweise angeordneter Stanzhülsen hat, mit denen aus einem Kupplungsbelags-Materialstreifen Kupplungsbelags-Teilstücke vor- oder ausgestanzt werden können, die anschließend auf die an einem Kupplungsscheiben-Träger vorgesehene Klebeschicht aufgedrückt und dort verklebt werden.

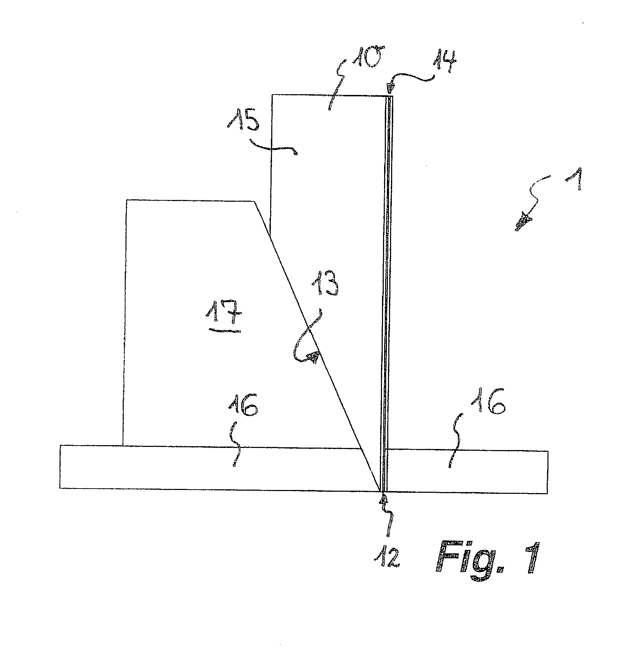

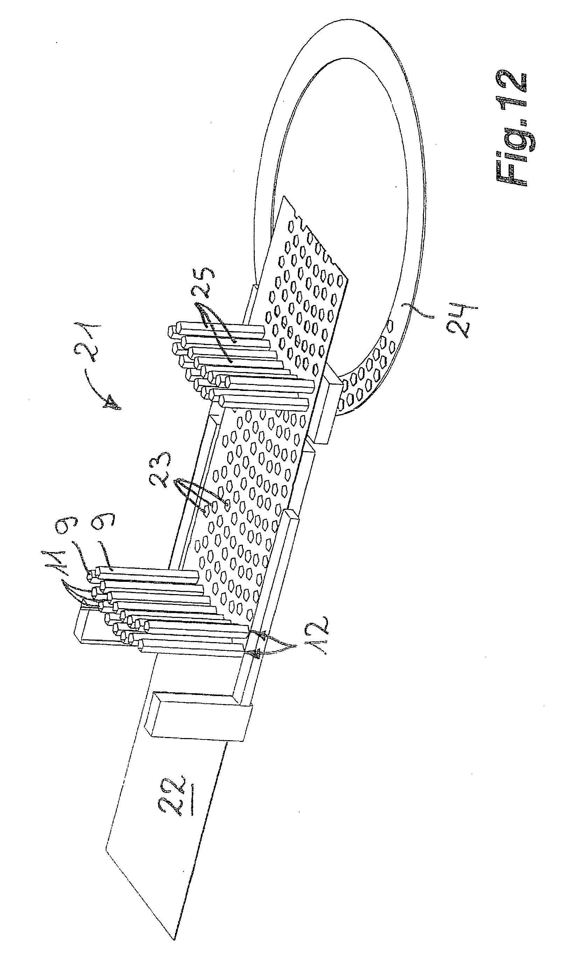

In den Figuren 1 bis 12 sind verschiedene Ausführungen 1, 2, 3, 4, 5, 6, 7, 8 und 9 von Schneid- oder Stanzwerkzeugen dargestellt. Die hier dargestellten Schneid- oder Stanzwerkzeuge 1 bis 9 sind mehrlagig ausgebildet. Während die Schneid- oder Stanzwerkzeuge 1 bis 8 ein Werkzeugblatt 10 haben, weist das in Figur 12 dargestellte Stanzwerkzeug 9 eine Werkzeug-Hülse 11 auf. Das Werkzeug-Blatt 10 oder die Werkzeug-Hülse 11 trägt eine Schneide, die eine Schneidkante 12 hat. Das Werkzeug-Blatt 10 oder die Werkzeug-Hülse 11 verjüngt sich im Bereich eines Anschliffs 13 in Richtung zur Schneidkante 12 hin. Dabei ist das Schneid- oder Stanzwerkzeug 1 bis 9 aus zumindest zwei flach- oder umfangsseitig miteinander verbundenen Materiallagen 14, 15 aus unterschiedlich hartem Material hergestellt. Die Schneide ist aus mindestens einer blattdünnen und entsprechend scharfkantigen Schneidlage 14 gebildet, die an mindestens einer ihrer beiden Flach- oder Umfangsseiten mit wenigstens einer Trägerlage 15 verbunden ist. Diese Trägerlage 15, welche die blattdünne Schneidlage 14 formstabil stützt, trägt den sich in Richtung zur Schneidkante 12 hin verjüngenden Anschliff 13 und weist eine im Vergleich zu der mindestens einen Schneidlage 14 geringere Härte auf. Während sich die vergleichsweise weiche Trägerlage 15 an abrasivem Material derart abnutzen kann, dass der Anschliff 13 erhalten bleibt, ist die blattdünne und eine scharfe Schneidkante 12 bildende Schneidlage 14 derart hart und beständig, dass das Schneidoder Stanzwerkzeug 1 bis 9 auch über einen längeren Zeitraum nicht stumpf wird.

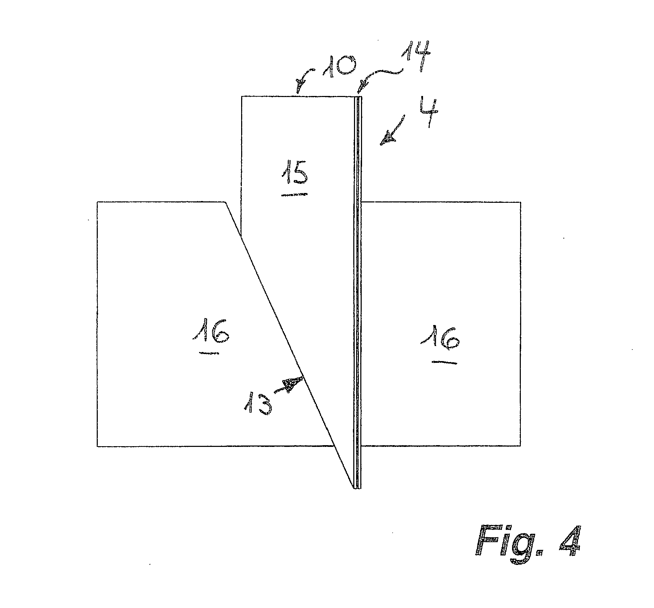

In den Figuren 4, 5, 6, 9, 11 und 12 ist gezeigt, dass die wenigstens eine Trägerlage 15 eine im Vergleich zu einem Schnitt- oder Stanzgut 16 geringere Härte aufweist. Aus den Figuren 4, 5, 9 und 12 ist erkennbar, dass die Trägerlage 15 aus einem Material oder einer Materialkombination hergestellt sein kann, gegenüber dem das Schnitt- oder Stanzgut 16 eine abrasive Wirkung hat, derart, dass die wenigstens eine Trägerlage 15 des durch das Schnitt- oder Stanzgut schneidenden Schneid- oder Stanzwerkzeuges 4, 5, 7 und 9 geschärft wird. Da die Trägerlage 15 durch das abrasive Schnitt- oder Stanzgut 16 während des Schneid- oder Stanzvorganges derart schleifend beansprucht wird, dass der an der Trägerlage 15 vorgesehene Anschliff 13 erhalten bleibt, ist stets auch eine scharfe Schneidkante 12 an der Schneidlage 14 vorgesehen.

Demgegenüber ist in den Figuren 1, 6 bis 8 sowie 10 und 11 gezeigt, dass den Schneid- oder Stanzwerkzeugen 1, 6 und 8 auch eine Werkzeugführung zugeordnet sein kann, an welcher Werkzeugführung das Schneid- oder Stanzwerkzeug 1, 6 und 9 während eines Schneidvorganges mit seiner Trägerlage 15 entlanggleitet, wobei die Werkzeugführung zumindest an seiner Führungsoberfläche aus einem für die Trägerlage 15 abrasiven Material besteht. Die Werkzeugführung, die hier durch ein Schleifelement 17 gebildet wird, hat auf das mit seiner an dem Schleifelement 17 entlanggleitenden Trägerlage 15 geführte Schneid- oder Stanzwerkzeug 1, 6 und 9 eine schärfende oder abrasive Wirkung.

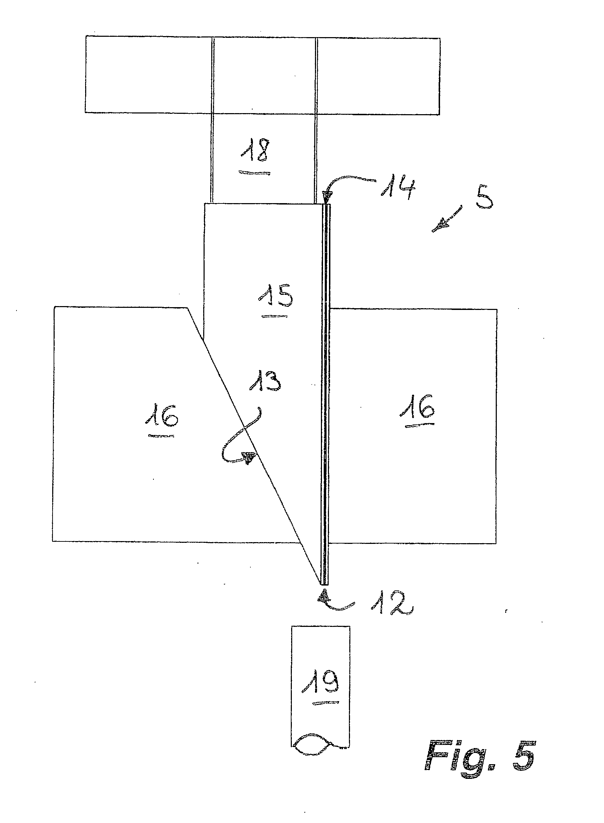

Dabei ist in Figur 5 angedeutet, dass das Schneid- oder Stanzwerkzeug 5 an einem Werkzeughalter 18 gehalten sein kann, der die Position des Schneid- oder Stanzwerkzeuges 5 relativ zum Schnitt- oder Stanzgut 16 in Abhängigkeit vom Verschleiß des Schneid- oder Stanzwerkzeuges 5 nachstellt. Um den Werkzeugverschleiß erfassen und um den Werkzeughalter 18 in Abhängigkeit vom Werkzeugverschleiß nachstellen zu können, ist ein Sensor 19 vorgesehen, der den Verschleiß des Schneidoder Stanzwerkzeuges 5 anhand mindestens eines in Abhängigkeit vom Werkzeugverschleiß verändernden Parameters misst. Dieser Parameter kann beispielsweise die Schnitttiefe oder - wie in Figur 5 - den Überstand der Schneidkante 12 des das Schnitt- oder Stanzgut 16 durchschneidenden Schneid- oder Stanzwerkzeuges über die Schnittgut- oder Stanzgut-Oberfläche messen.

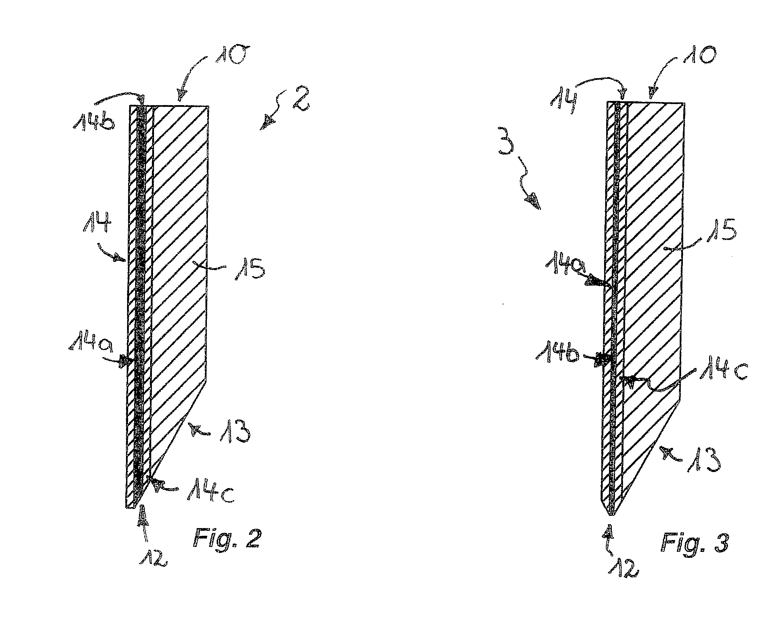

Damit auch die Schneide stets eine scharfe Schneidkante 12 hat, wird die in den Figuren 2 und 3 näher dargestellte Ausführung bevorzugt, bei der die Schneide aus mindestens zwei vorzugsweise blattdünnen Materiallagen 14a, 14b und 14c gebildet ist. Dabei weisen die Materiallagen 14a, 14b und 14c der in den Figuren 2 und 3 gezeigten Schneiden blattdünne Materiallagen unterschiedlicher Härte auf. Da hier die Schneidlagen 14a, 14b, und 14c unterschiedliche Härten aufweisen, zeichnet sich das Werkzeug-Blatt 10 dieser Stanzoder Schneidwerkzeuge 2, 3 durch eine lange Dauerschärfe aus. Da dabei die die Schneidkante 12 bildende Schneidlage 14b eine im Vergleich zu den übrigen, die Schneide bildenden Schneidlagen 14a und 14c größere Härte hat, wird eine sehr dünne und entsprechend scharfe Schneide gebildet. Die beidseits der zentralen Schneidlage 14b angeordneten Schneidlagen 14a und 14c stützen die die Schneidkante 12 tragende Schneidlage 14b. Das Werkzeug-Blatt 10 der in Figur 2 und 3 gezeigten Schneid- oder Stanzwerkzeuge 2, 3 zeichnet sich durch eine hohe Grundschärfe aus, da die Schneidschichten 14a, 14b und 14c zusammen immer noch sehr dünn sind und eine trotz ihrer Mehrlagigkeit dünne Schneidlage 14 bilden. Die Schneidlagen 14a, 14b und 14c, die dieselbe Dicke aufweisen oder auch unterschiedlich dick ausgestaltet werden können, können beispielsweise eine Härte von 3.000 bis 6.000 HV und insbesondere von 3.800 bis 5.000 HV aufweisen. So kann beispielsweise die Schneidlage 14a eine Härte von 4.000 HV und die auf der gegenüberliegenden Seite des Werkzeug-Blattes 10 angeordnete Schneidlage 14c eine Härte von 3.800 HV aufweisen, während demgegenüber die die Schneidkante 12 tragende Schneidlage 14b eine Härte von beispielsweise 5.000 HV hat. Die Anzahl der benötigten Schneidlagen lässt sich in Abhängigkeit von der vorgesehenen Anwendung festlegen. Aus einem Vergleich der Figuren 2 und 3 wird deutlich, dass der die Schneidkante bildende Freiwinkel der Schneidlagen 14a, 14b, 14c je nach Schnittgut und Anwendung unterschiedlich ausgestaltet sein kann. Während sich der Anschliff 13 an der Trägerlage 15 bei dem in Figur 2 dargestellten Schneid- oder Stanzwerkzeug 2 in einer ebenfalls schrägen Schneidkante 12 fortsetzt, ist die Schneidkante 12 des in Figur 3 gezeigten Schneid- oder Stanzwerkzeuges 3 dachförmig mit beidseits zu einer Schneidspitze zulaufenden Schrägflächen ausgebildet.

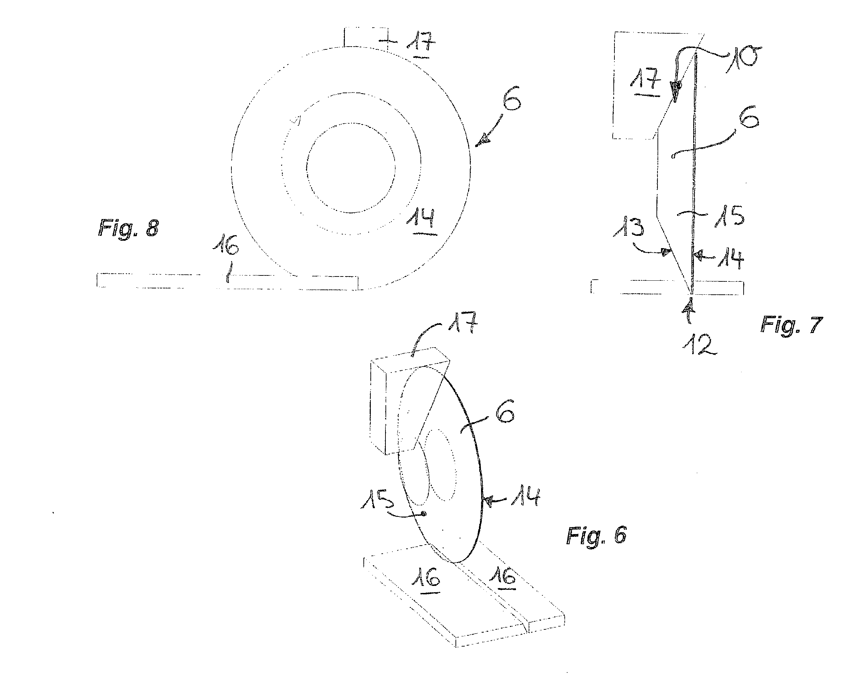

In den Figuren 6 bis 8 ist gezeigt, dass das Schneidwerkzeug 6 auch als ein drehbar gelagertes oder drehantreibbares Rollmesser ausgebildet sein kann. Das in den Figuren 6 bis 8 dargestellte Rollmesser 6 hat eine kegelstumpfförmige Außenkontur, dessen Kegelstumpfbasis die zumindest eine Schneidlage 14 bildet. Dabei ist das Rollmesser 6 koaxial zur Kegelstumpf-Längsachse drehbar oder drehantreibbar gelagert. An der Trägerlage 15 des Rollmessers 6 liegt mit Abstand vom Schnittgut 16 ein Schleifelement 17 an, derart, dass das Schneidelement an der Trägerlage 15 des Rollmessers 6 abrasiv oder schärfend geführt ist.

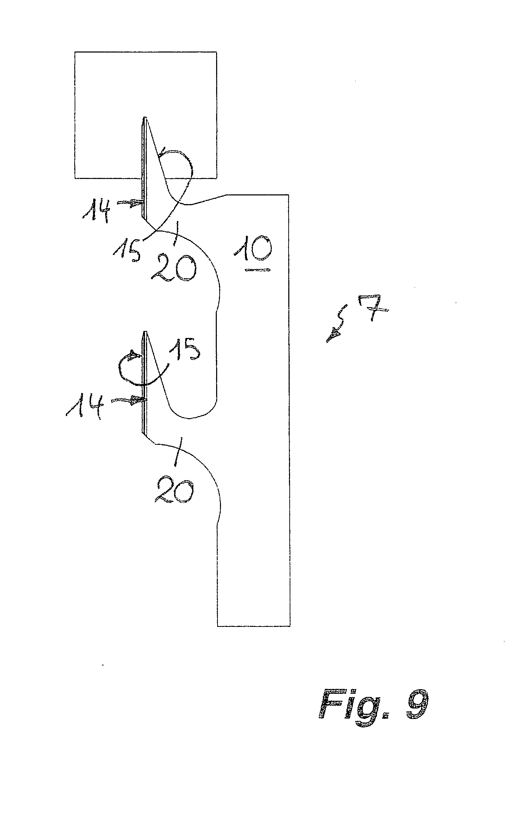

Aus Figur 9 wird deutlich, dass das Schneidwerkzeug 7 auch als Sägeblatt einer Säge ausgebildet sein kann. An dem als Werkzeug-Blatt 10 dienenden Sägeblatt stehen Sägezähne 20 vor, die eine Schneide mit einer Schneidkante 12 tragen. Dabei sind die die Schneide tragenden Sägezähne 20 aus zumindest zwei flachseitig miteinander verbundenen Materiallagen 14, 15 gebildet. Während die Trägerlage 15 aus einem im Vergleich zum Schnittgut weicheren Material hergestellt ist, weist die zumindest eine Schneidlage 14 und hier die die Schneide bildenden Schneidlagen 14a, 14b und 14c eine im Vergleich zum Schnittgut größere Härte auf. Das hier als Sägeblatt ausgebildete Werkzeug-Blatt 10 kann auch als bandförmig umlaufendes Sägeband einer Bandsäge ausgebildet sein.

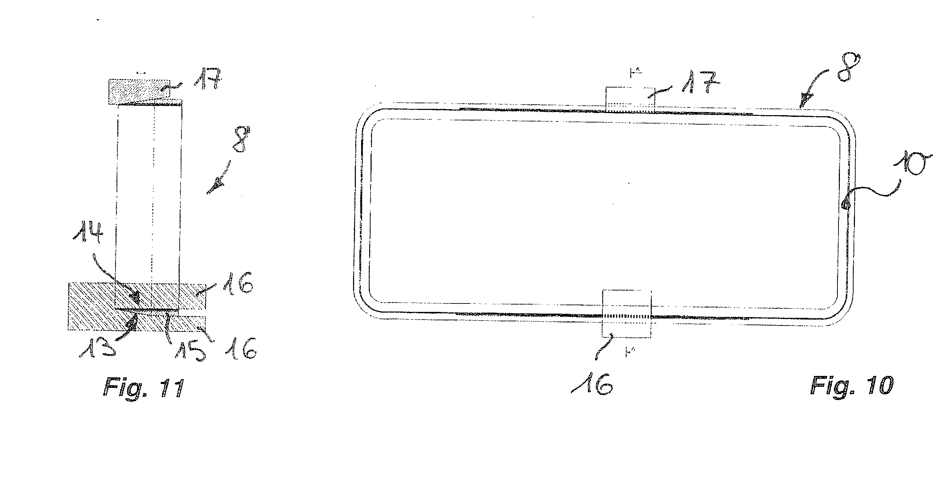

In den Figuren 10 und 11 ist ein Schneidwerkzeug 8 gezeigt, das hier als Spaltband ausgebildet ist, mit welchem Spaltband eine Materiallage 16 und insbesondere eine Lederschicht in zumindest zwei Lagen aufgespaltet werden kann. Das als Spaltband ausgebildete Schneidwerkzeug 8 ist hier in einer Spaltvorrichtung als im Rechteck umlaufend geführtes Spaltband ausgebildet. Während das Spaltband an seiner einen Spaltband-Längsseite das Schnittgut aufspaltet, wird das Spaltband an seiner gegenüberliegenden Spaltband-Längsseite an einem Schleifelement 17 geführt, welches auf die Trägerlage 15 des Spaltbandes eine derart abrasive Wirkung hat, dass der Anschliff an der Trägerlage 15 stets gewährleistet ist und das Spaltband fortwährend eine scharfe Schneidkante hat.

In Figur 12 ist eine Stanzmaschine 21 in einer schematischen Perspektivdarstellung gezeigt. In der Stanzmaschine 21 sind mehrere Stanzwerkzeuge 9 vorgesehen, die mit geringem Abstand zueinander in einer Stanzwerkzeug-Gruppe angeordnet sind. Die in ihrer Längsrichtung verschieblich geführten und als Werkzeug-Hülse ausgebildeten Stanzwerkzeuge 9 sind dazu bestimmt, aus einem Kupplungsbelags-Materialstreifen 22 einzelne Kupplungsbelags-Teilstücke 23 auszustanzen oder zumindest vorzustanzen. Nach dem Austanzen oder Vorstanzen der Kupplungsbelags-Teilstücke 23 wird der Kupplungsbelags-Materialstreifen 22 weiter vorgeschoben, bis sich unterhalb dieses Kupplungsbelags-Materialstreifens 22 eine Kupplungsscheibe oder ein Kupplungsscheiben-Träger 24 befindet. Dieser hier ringförmig ausgebildete Kupplungsbelags-Träger 24 weist auf seiner dem Kupplungsbelags-Materialstreifen 22 zugewandten Flachseite eine Klebeschicht auf. Sobald sich der Kupplungsbelags-Materialstreifen 22 oberhalb des Kupplungsscheiben-Trägers 24 befindet, werden die noch im Kupplungsbelags-Materialstreifen 22 befindlichen Kupplungsbelags-Teilstücke 23 mithilfe von Druckstempeln aus dem Materialstreifen ausgedrückt und auf die Klebeschicht des Kupplungsscheiben-Trägers 24 gedrückt, wo sie anschließend dauerhaft fixiert sind. Da die Stanzwerkzeuge 9 stets eine scharfe Schneidkante 12 haben, sind leistungsmindernde Ausfransungen auf beiden Seiten der ausgestanzten Kupplungsbelags-Teilstücke 23 nicht zu befürchten.

Die in der Stanzmaschine 21 gemäß Figur 12 vorgesehenen Stanzwerkzeuge 9 bilden jeweils eine Werkzeug-Hülse, die gemäß den in den Figuren 1 bis 11 gezeigten Ausführungsbeispielen 1 bis 8 aufgebaut sind. Auch die hülsenförmigen Stanzwerkzeuge 9 weisen an der dem Stanzgut zugewandten Stirnseite ihrer Hülsenform eine Schneidkante auf. Dabei verjüngt sich die Werkzeug-Hülse der Standswerkzeuge 9 in Richtung zur Schneidkante 12 im Bereich eines hier innen- oder außenliegend angeordneten Anschliffs. Auch die Standswerkzeuge 9 sind aus zumindest zwei flachseitig miteinander verbundenen Materiallagen hergestellt, wobei die Schneide aus mindestens einer blattdünnen Schneidlage gebildet ist, die am Außen- oder Innenumfang des hülsenförmigen Schneidwerkzeuges angeordnet ist. Diese mindestens eine Schneidlage ist an wenigstens einer ihrer beiden Umfangsseiten mit wenigstens einer Trägerlage verbunden, die den sich in Richtung zur Schneidkante 12 verjüngenden Anschliff trägt. Dabei weist die Trägerlage eine im Vergleich zu der mindestens einen Schneidlage geringere Härte auf. Wie auch bei den Ausführungsbeispielen 1 bis 8 gemäß den Figuren 1 bis 11 wird auch bei dem Stanzwerkzeug 9 gemäß Figur 12 eine Ausführung bevorzugt, bei welcher die Schneide durch zumindest zwei und vorzugsweise durch drei Schneidlagen vorzugsweise unterschiedlicher Härte gebildet ist.

## Patentansprüche

1. Schneid- oder Stanzwerkzeug (1, 2, 3, 4, 5, 6, 7, 8, 9), das aus mehreren Materiallagen (14, 15) gebildet ist, und ein Werkzeug-Blatt (10) oder eine Werkzeug-Hülse (11) trägt, wobei das Werkzeug-Blatt (10) oder die Werkzeug-Hülse (11) sich in Richtung zur Schneidkante (12) im Bereich eines Anschliffs (13) verjüngt, **dadurch gekennzeichnet, dass** das Schneid- oder Stanzwerkzeug (1, 2, 3, 4, 5, 6, 7, 8, 9) aus zumindest zwei flachseitig miteinander verbundenen Materiallagen (14, 15) aus unterschiedlich hartem Material hergestellt ist, das die Schneide aus mindestens einer blattdünnen Schneidlage (14; 14a, 14b, 14c) gebildet ist, dass die wenigstens eine Schneidlage (14; 14a, 14b, 14c) mindestens an einer ihrer beiden Flach- oder Umfangsseiten mit wenigstens einer Trägerlage (15) verbunden ist, welche wenigstens eine Trägerlage (15) den sich in Richtung zur Schneidkante (12) verjüngenden Anschliff (13) trägt und dass die wenigstens eine Trägerlage (15) im Vergleich zu der mindestens einen Schneidlage (14; 14a, 14b, 14c) eine geringere Härte aufweist.

2. Schneid- oder Stanzwerkzeug nach Anspruch 1, **dadurch gekennzeichnet, dass** die mindestens eine Schneidlage (1; 14a, 14b, 14c) eine im Vergleich zu einem Schnitt- oder Stanzgut größere Härte aufweist.

3. Schneid- oder Stanzwerkzeug nach Anspruch 1 oder 2, **dadurch gekennzeichnet, dass** die wenigstens eine Trägerlage (15) eine im Vergleich zu einem Schnitt- oder Stanzgut geringere Härte aufweist.

4. Schneid- oder Stanzwerkzeug nach einem der Ansprüche 1 bis 3, **dadurch gekennzeichnet, dass** das Schnitt- oder Stanzgut auf die wenigstens eine Trägerlage (15) eine abrasive Wirkung hat, derart, dass die mindestens eine Trägerlage (15) des durch das Schnitt- oder Stanzgut (16, 22) schneidenden Schneid- oder Stanzwerkzeuges geschärft wird.

5. Schneid- oder Stanzwerkzeug nach einem der Ansprüche 1 bis 4, **dadurch gekennzeichnet, dass** die Schneide aus mindestens zwei vorzugsweise blattdünnen Materiallagen (14a, 14b, 14c) gebildet ist.

6. Schneid- oder Stanzwerkzeug nach einem der Ansprüche 1 bis 5, **dadurch gekennzeichnet, dass** die Schneide aus mindestens zwei vorzugsweise blattdünnen Materiallagen (14a, 14b, 14c) unterschiedlicher Härte gebildet ist.

7. Schneid- oder Stanzwerkzeug nach Anspruch 6, **dadurch gekennzeichnet, dass** eine die Schneidkante (12) bildende Schneidlage (14b) eine im Vergleich zu den übrigen, die Schneide bildenden Schneidlagen (14a, 14c) größere Härte aufweist.

8. Schneid- oder Stanzwerkzeug nach einem der Ansprüche 5 bis 7, **dadurch gekennzeichnet, dass** jede Schneidlage eine Dicke von 0,2 bis 20 µ und vorzugsweise von 0,5 bis 3 µ aufweist.

9. Schneid- oder Stanzwerkzeug nach einem der Ansprüche 1 bis 8, **dadurch gekennzeichnet, dass** das Schneid- oder Stanzwerkzeug zumindest eine Werkzeugführung hat, an welcher Werkzeugführung das Schneid- oder Stanzwerkzeug während eines Schneidvorganges mit seiner Trägerlage (15) entlanggleitet, dass die Werkzeugführung zumindest an seiner Führungsoberfläche aus einem für die Trägerlage (15) abrasivem Material besteht und dass die Werkzeugführung für das mit seiner an der Werkzeugführung entlanggleitenden Trägerlage (15) geführte Schneid- oder Standwerkzeugs eine schärfende oder abrasive Wirkung hat.

10. Schneid- oder Stanzwerkzeug nach einem der Ansprüche 1 bis 9, **dadurch gekennzeichnet, dass** dem Schneid- oder Stanzwerkzeug wenigstens ein Sensor (19) zugeordnet ist, welcher Sensor (19) den Verschleiß des Schneid- oder Stanzwerkzeuges (5) anhand mindestens eines in Abhängigkeit vom Werkzeugverschleiß verändernden Parameters misst.

11. Schneid- oder Stanzwerkzeug nach Anspruch 10, **dadurch gekennzeichnet, dass** der Sensor (19) die Schnitttiefe oder den Überstand der Schneidkante (12) des das Schnitt- oder Stanzgut (16) durchschneidenden Schneidoder Stanzwerkzeuges (5) über die Schnitt- oder Stanzgut-Oberfläche misst.

12. Schneid- oder Stanzwerkzeug nach Anspruch 10 oder 11, **dadurch gekennzeichnet, dass** das Schneid- oder Stanzwerkzeug (5) an einem Werkzeughalter (18) gehalten ist, der die Position des Schneid- oder Stanzwerkzeuges (5) relativ zum Schnitt- oder Stanzgut (16) in Abhängigkeit vom Verschleiß des Schneid- oder Stanzwerkzeuges (5) nachstellt.

13. Schneid- oder Stanzwerkzeug nach einem der Ansprüche 1 bis 12, **dadurch gekennzeichnet, dass** das Schneidwerkzeug (6) als ein drehbar gelagertes oder drehantreibbares Rollmesser ausgebildet ist.

14. Schneid- oder Stanzwerkzeug nach Anspruch 13, **dadurch gekennzeichnet, dass** das Rollmesser (6) eine kegelstumpfförmige Außenkontur hat, dessen Kegelstumpfbasis die zumindest eine Schneidlage (14; 14a, 14b, 14c) bildet und dass das Rollmesser koaxial zur Kegelstumpf-Längsachse drehbar oder drehbantreibbar gelagert ist.

15. Schneid- oder Stanzwerkzeug nach einem der Ansprüche 1 bis 14, **dadurch gekennzeichnet, dass** an der Trägerlage (15) vorzugsweise mit Abstand vom Schnitt- oder Stanzgut (16) ein Schleifelement (17) schleifend anliegt oder anlegbar ist.

16. Schneid- oder Stanzwerkzeug nach einem der Ansprüche 1 bis 15, **dadurch gekennzeichnet, dass** das Schneidwerkzeug (7) als Sägeband oder Sägeblatt ausgebildet ist.

17. Schneid- oder Stanzwerkzeug nach einem der Ansprüche 1 bis 15, **dadurch gekennzeichnet, dass** das Schneidwerkzeug (8) als Spaltband ausgebildet ist.

18. Schneid- oder Stanzwerkzeug nach Anspruch 17, **dadurch gekennzeichnet, dass** das Spaltband (8) als umlaufendes Endlosband ausgebildet ist und/oder dass am Spaltband ein Schleifelement (17) schleifend anliegt oder anlegbar ist.

19. Schneid- oder Stanzwerkzeug nach einem der Ansprüche 1 bis 15, **dadurch gekennzeichnet, dass** das Stanzwerkzeug (9) zum Vorstanzen oder Ausstanzen von Teilstücken (23) aus einem Kupplungsbelags-Materialstreifen (22) bestimmt ist, und dass dem Stanzwerkzeug (9) ein Stempel (25) folgt, der ein vor- oder ausgestanztes Teilstück (23) aus dem Kupplungsbelags-Materialstreifen (22) ausdrückt und vorzugsweise gegen eine Klebefläche eines Kupplungsscheibenträgers (24) drückt.
